# EUROPÄISCHE PATENTSCHRIFT

(11) **EP 3 783 242 B1**
(45) Veröffentlichungstag und Bekanntmachung des Hinweises auf die Patenterteilung: **28.12.2022**
(21) Anmeldenummer: 19193161.7
(22) Anmeldetag: 22.08.2019
(51) Int. Cl.: F16D 55/2255, F16D 121/24, F16D 65/00, F16D 125/32

(54) **SCHEIBENBREMSE FÜR FAHRZEUGE, INSBESONDERE FÜR NUTZAHRZEUGE, MIT EINEM ELEKTROMECHANISCHEN AKTUATOR**
DISC BRAKE FOR VEHICLES, ESPECIALLY FOR COMMERCIAL VEHICLES, WITH AN ELECTROMECHANICAL ACTUATOR
FREIN À DISQUE POUR VÉHICULES, EN PARTICULIER POUR VÉHICULES UTILITAIRES, AVEC UN ACTIONNEUR ÉLECTROMÉCANIQUE

(43) Veröffentlichungstag der Anmeldung: 24.02.2021
(73) Patentinhaber: ZF CV Systems Global GmbH, 3006 Bern (CH)
(72) Erfinder: Henning, Paul, 68723 Schwetzingen (DE); Tomala, Bartlomiej, 45-267 Opole (PL)
(74) Vertreter: Rabe, Dirk-Heinrich

(56) Entgegenhaltungen:
- EP-A1- 2 239 480
- EP-B1- 2 239 480
- DE-A1-102012 006 090
- DE-A1-102017 004 436
- JP-B2- 3 774 003

## Beschreibung

Die Erfindung betrifft eine Scheibenbremse mit einem elektromechanischen Aktuator für Fahrzeuge, insbesondere für Nutzfahrzeuge, umfassend eine Bremsscheibe, einen Bremsträger und einen Bremssattel eines Fahrzeuges zum Zuspannen der Bremsscheibe mittels Bremsbelägen. Der elektromechanische Aktuator umfasst einen Motor, eine als Kraftübertragungseinrichtung ausgebildete Kurvenscheibe, und einen als Stelleinheit ausgebildeten Stößel. Elektromechanische Aktuatoren zum Zuspannen von Bremsbelägen für Scheibenbremsen sind hinlänglich bekannt. Die Stelleinheit wird elektrisch mit einem Motor, der mit der Stelleinheit über die Kraftübertragungseinrichtung gekoppelt ist, angetrieben. Die Kraftübertragungseinrichtung kann eine Kurvenscheibe sein, die eine rotierende Bewegung des Motors in eine translatorische Bewegung umwandelt. Die translatorische Bewegung, auch bekannt als Linearbewegung, wird mittels einem mit der Kurvenscheibe wirkverbundenden Stößel auf einen Drehhebel der Scheibenbremse übertragen. Der Drehhebel spannt über ein Druckstück und den Bremsbelägen die Bremsscheibe während eines Bremsvorgangs zu. In aktuellen Lösungen ist der Stößel nach der Montage nicht richtig in einem Gehäuse des elektromechanischen Aktuators fixiert, weshalb der Stößel nach der Positionierung aus dem Drehhebel fallen kann, was zur Folge hat, dass die Kraftübertragung zum Zuspannen der Bremsscheibe unterbrochen ist und die Bremsscheibe nicht zugespannt werden kann.

Die DE 10 2017 004436 A1 offenbart eine Scheibenbremse mit einem elektromechanischen Aktuator für Fahrzeuge zum Zuspannen einer Bremsscheibe. Der elektromechanische Aktuator weist eine Kurvenscheibe und einen entlang einer axialen Achse mit der Kurvenscheibe wirkverbundenen Stößel auf. Eine Sicherung gegen eine Fehlstellung des Stößel nach seiner Montage und einer damit verbundenen möglichen Beschädigung von Stößel, Gehäuse und Kurvenscheibe ist nicht vorgesehen.

Die Dokumente EP 2 239 480 A1 und DE 10 2012 006090 A1 offenbaren eine Scheibenbremse für Nutzfahrzeuge, wobei die Bremsscheibe über eine Zuspanneinheit mit einem Drehhebel und einem mit dem Drehhebel wirkverbundenen Bremszylinder pneumatisch zugespannt wird.

JP 3 774003 B2 offenbart einen elektromechanischen Aktuator für eine Scheibenbremse. Ein Stößel ist mit einer Kurvenscheibe und einem Druckstück wirkverbunden. Das Druckstück weist zur Aufnahme des Stößels eine kalottenförmige Aufnahme auf.

Aufgabe der Erfindung ist es, die Probleme aus dem Stand der Technik zu überwinden und eine Scheibenbremse mit einem elektromechanischen Aktuator bereitzustellen, der eine Beschädigung des Stößels, der Kurvenscheibe und des Gehäuses des elektromechanischen Aktuators reduziert oder sogar verhindert.

Gelöst wird die Aufgabe dadurch, dass eine Kurvenscheibe eines elektromechanischen Aktuators einer Scheibenbremse einen Anschlag aufweist und der Anschlag dazu eingerichtet ist den Stößel in einer Ausgangsposition des Drehhebels, in Richtung einer axialen Achse des elektromechanischen Aktuators, entgegengesetzt der Kurvenscheibe, zu fixieren. Als Ausgangsposition des Drehhebels ist die Position gemeint, bei der keine Bremsung seitens des Fahrers initiiert wird. Oder anders ausgedrückt, auf den Drehhebel der Scheibenbremse wird keine Kraft und damit kein Drehmoment aufgebracht. Der Anschlag klemmt den Drehhebel in der Kurvenscheibe ein, wobei der Anschlag zwei Eigenschaften aufweist. Zum einen verhindert der Anschlag eine axiale Bewegung in Richtung des Drehhebels. Zum anderen dient der Anschlag als Auflage für den Drehhebel, sodass der Drehhebel und eine Führung des elektromechanischen Aktuators axial in einer Ebene angeordnet sind und der Anschlag zusammen mit einem weiteren Anschlag am Aktuatorgehäuse eine Drehbewegung um die eigene Achse des Drehhebels verhindert.

In einer weiteren Ausgestaltung weist der elektromechanische Aktuator zwischen einem Führungsbereich des Stößels, zum Führen des Stößels entlang der axialen Achse, und einer ersten Innenwand des Führungsbereichs des Aktuatorgehäuses einen Abstand auf und der Abstand ist dazu ausgelegt, das der Stößel in einem Bereich, ausgehend von der Ausgangsposition des Drehhebels, zwischen 0° und 5°, besonders vorteilhaft zwischen 0° und 3 °, um ein Stößelachse bewegbar ist. Der Stößel ist einerseits in der Kurvenscheibe angeordnet. Andererseits weist der Stößel bis zu der ersten Innenwand des Führungsbereichs des Aktuatorgehäuses einen Abstand zwischen 0° bis 5° auf. Der Vorteil ist, dass der Stößel in Einbaulage bleibt, also nicht aus der Kurvenscheibe herausfallen kann. Gleichzeitig verhindert der Abstand ein Verklemmen des Stößels in der Führung, ausgelöst durch Toleranzen in der Breite der Führung, die im Herstellungsprozess auftreten.

In einer weiteren Ausführung weist der Anschlag radial in Richtung des Stößels eine Anlagefläche auf. Der Stößel liegt in der Ausgangsposition des Drehhebels an der Anlagefläche an. Die Anlagefläche erleichtert die Montage des Stößels, insbesondere die Anordnung des Stößels in eine Aufnahme des Drehhebels. Genauer gesagt, kann der Stößel nicht radial wegkippen, sondern bleibt axial in Position, sodass der Drehhebel während der Montage leicht in die Aufnahme des Stößels angeordnet werden kann.

Zudem weist der Führungsbereich des Aktuatorgehäuses stirnseitig, bezogen auf die axiale Achse, eine zweite Innenwand auf. Der Stößel liegt in der Ausgangsposition des Stößels an der zweiten Innenwand des Führungsbereichs des Aktuatorgehäuses an. Der Stößel ist in der Ausgangsposition also axial zwischen dem Anschlag und der zweiten Innenwand des Führungsbereichs eingeklemmt.

Eine Fehlstellung des Stößels nach der Montage, also wenn der Stößel nicht in der Aufnahme des Drehhebels angeordnet ist, wird mit der Positionierung des Stößels auf der Anlagefläche und der Positionierung des Stößels an der zweiten Innenwand der Führungsfläche verhindert. Der Stößel verklemmt nicht zwischen dem Drehhebel und der Kurvenscheibe und die Kurvenscheibe, sowie das Gehäuse des elektromechanischen Aktuators werden durch den Stößel nicht beschädigt.

In einer Weiterbildung weist der Stößel eine Führungsrolle und einen axial in Richtung des Drehhebels der Scheibenbremse angeordneten Hebelarm auf, wobei der Hebelarm in der Ausgangsposition des Drehhebels an der Anlagefläche anliegt. Die Führungsrolle führt den Drehhebel entlang der Kurvenscheibe und der Hebelarm dient als Bindeglied zwischen der Führungsrolle des Stößels und dem Drehhebel der Scheibenbremse.

Es hat sich darüber hinaus in einer weiteren Ausführung als Vorteil erwiesen, dass die Kurvenscheibe schneckenförmig ausgebildet ist und dass der Anschlag radial an einem äußeren Ende der Kurvenscheibe angeordnet ist. Die Kurvenscheibe ist über eine Welle mit einem Antrieb des elektromechanischen Aktuators in dem Gehäuse des elektromechanischen Aktuators angeordnet. Zwischen dem Anschlag und der Welle weist die Kurvenscheibe eine Vertiefung zur Aufnahme der Führungsrolle des Stößels auf. Oder anders ausgedrückt, der Anschlag ist ein radial verlaufender Ansatz an der Außenseite der Kurvenscheibe, und der radiale Ansatz und die dem radialen Ansatz gegenüberliegende Seite der Kurvenscheibe bilden einen Trog zur Aufnahme des Stößels.

In einer alternativen zweiten Ausführungsform umschließt eine Feder den Stößel. Die Feder ist axial mit einem ersten Endanschlag an dem Aktuatorgehäuse angeordnet. Zudem ist die Feder axial mit einem zweiten Endanschlag an dem Stößel angeordnet. Die Feder ist wiederum dazu ausgebildet, den Stößel in einer Ausgangsposition des Drehhebels axial und radial zu fixieren. Die alternative Ausführungsform macht sich die Erkenntnis zu Nutze, dass die Feder als Führung des Stößels dient und ein Herausfallen aus der Kurvenscheibe verhindert, und gleichzeitig so variabel ist, dass die Feder eine axiale Bewegung des Stößels zur Betätigung des Drehhebels der Scheibenbremse zulässt.

Zur richtigen Positionierung der Feder in dem Aktuatorgehäuse weist eine Weiterbildung der zweiten Ausführungsform eine Federaufnahme zum Abstützen des ersten Endanschlags der Feder in axialer Richtung auf. Die Federaufnahme ist in der Führung des Gehäuses und vor dem Drehhebel der Scheibenbremse angeordnet. Die Feder ist eine Druckfeder, wobei die Druckfeder sich an der Federaufnahme axial und radial abstützt.

In einer weiteren Ausführung der zweiten Ausführungsform ist die Federaufnahme ein Federteller. Der Federteller weist mittig eine Öffnung zum Durchführen des Hebelarms des Stößels auf.

Das Aktuatorgehäuse, an dem die Federaufnahme befestigt ist, ist in einer vorteilhaften Weiterbildung der zweiten Ausführung ein Aluminiumgehäuse. Unter anderen ist ein Aluminiumgehäuse gegenüber einem Gussstahl leicht und gut verformbar. Mit einem Aluminiumgehäuse ist es möglich, dass die Führung mittels eines Bearbeitungswerkzeugs leicht dem Durchmesser der Federaufnahme angepasst werden kann. Auch eine Nachbearbeitung der Führung, beispielsweise mittels eines Fräßwerkzeugs, zur Anordnung der Federaufnahme ist möglich.

In einer dritten Ausführung weist der elektromechanische Aktuator der Scheibenbremse, tangential entlang des Stößels, eine erste Feder und gegenüberliegend der ersten Feder, tangential entlang des Stößels, eine zweite Feder auf, wobei die erste Feder und die zweite Feder dazu ausgebildet sind den Stößel axial und radial in einer Ausgangsposition des Drehhebels zu halten. Anders ausgedrückt sind an je einer axialen Seite des Stößels eine Feder angeordnet, die den Stößel in Position halten. Die erste Feder und die zweite Feder können aus einem Metallwerkstoff oder aus einem Kunststoff hergestellt werden.

In einer Weiterbildung der dritten Ausführungsform weist eine Führungsrolle des Stößels, bezogen auf die axiale Achse, senkrecht und horizontal ein erstes Aufnahmelager zur Fixierung eines Endanschlags der ersten Feder auf. Weiterhin weist die Führungsrolle, bezogen auf die axiale Achse, senkrecht und horizontal in zweites Aufnahmelager zur Fixierung eines Endanschlags der zweiten Feder auf. Das zweite Aufnahmelager ist achsparallel zu dem ersten Aufnahmelager angeordnet. Zwischen dem ersten Aufnahmelager und dem zweiten Aufnahmelager ist der Stößel angeordnet. Der Stößel mit der Führungsrolle ist unabhängig von dem ersten Aufnahmelager und dem zweiten Aufnahmelager beweglich. Das erste Aufnahmelager und das zweite Aufnahmelager sind axiale radial nicht beweglich.

In einer weiteren Ausführung der dritten Weiterbildung weist der elektromechanische Aktuator ein erstes Federhalteelement zur Aufnahme des Endanschlags der ersten Feder auf. Zusätzlich weist der elektromechanische Aktuator ein zweites Federhalteelement zur Aufnahme des Endanschlags der zweiten Feder auf. Sowohl das erste Federhalteelement als auch das zweite Federhalteelement dienen dazu, dass die erste Feder und die zweite Feder axial gespannt sind und den Stößel gegen ein Herausfallen aus der Kurvenscheibe in Position halten.

In einer vorteilhaften Ausgestaltung der dritten Ausführungsform ist das erste Federhalteelement radial an einer ersten Innenwand des Führungsbereichs des Aktuatorgehäuses fixiert und das zweite Federhalteelement ist radial an der ersten Innenwand des Führungsbereichs des Aktuatorgehäuses fixiert. Das erste Federhalteelement wird zur Positionierung radial in eine Nut der Führung des elektromechanischen Aktuators gesteckt und das zweite Federhalteelement wird auch zur Positionierung radial in eine Nut der Führung des elektromechanischen Aktuators gesteckt.

Zudem hat sich in einer weiteren Ausführung der dritten Ausführungsform als Vorteil erwiesen, dass das erste Federhalteelement über eine erste Schraubverbindung und eine erste Feder-Nut-Verbindung an der ersten Innenwand des Führungsbereichs des Aktuatorgehäuses fixiert ist und das das zweite Federhalteelement über eine zweite Schraubverbindung und eine Feder-Nut-Verbindung an der ersten Innenwand des Führungsbereichs des Aktuatorgehäuses fixiert ist.

Nach der Positionierung des ersten Federhalteelements und des zweiten Federhalteelements wird anschließend das erste Federhalteelement kraftschlüssig über die erste Schraubverbindung axial an dem Gehäuse des elektromechanischen Aktuators befestigt und das zweite Federhaltelement wird kraftschlüssig über die zweite Schraubverbindung axial an dem Gehäuse des elektromechanischen Aktuators befestigt. Sowohl die erste Schraubverbindung verhindert ein Verdrehen des ersten Federhalteelements um die axiale Achse, als auch die zweite Schraubverbindung verhindert ein Verdrehen des zweiten Federhalteelements um die axiale Achse.

Das Aktuatorgehäuse ist in einer letzten Weiterbildung ein Aluminiumgehäuse. Aluminiumgehäuse sind leicht und mittels eines Bearbeitungswerkzeugs gut verformbar.

Nachfolgend werden ausgewählte Ausführungsbeispiele der Erfindung anhand der beigefügten Figuren erläutert.

Es zeigt:
Fig. 1 eine Scheibenbremse mit einem elektromechanischen Aktuator in einer Draufsicht,
Fig. 2 zeigt eine Scheibenbremse mit einem elektromechanischen Aktuator nach Fig. 1 in einer seitlich geschnittenen Ansicht,
Fig. 2a zeigen einen Ausschnitt des elektromechanischen Aktuators nach Fig. 2 mit einem Drehhebel der Scheibenbremse nach Fig. 1,
Fig. 3 zeigt in einer Detailansicht eine zweite Ausführungsform des elektromechanischen Aktuators der Scheibenbremse nach Fig. 1 bis 2a,
Fig. 4 zeigt in einer Detailansicht eine dritte Ausführungsform des elektromechanischen Aktuators der Scheibenbremse nach Fig. 1 bis 2a.

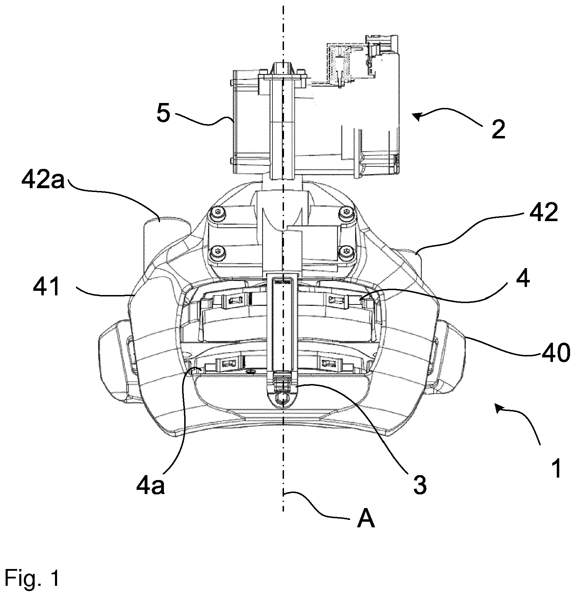

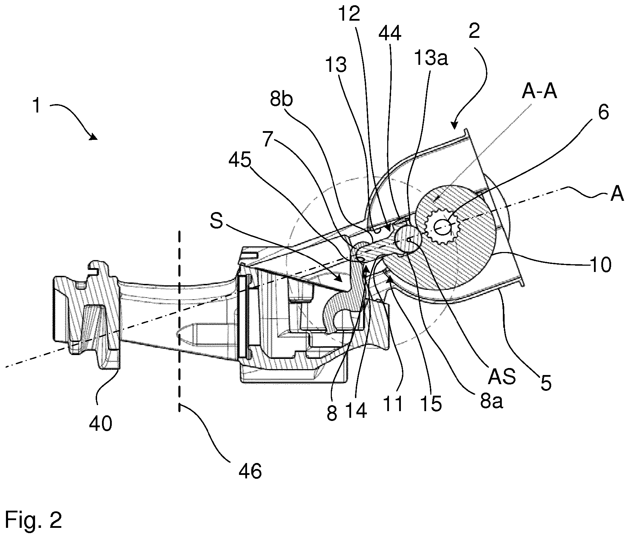

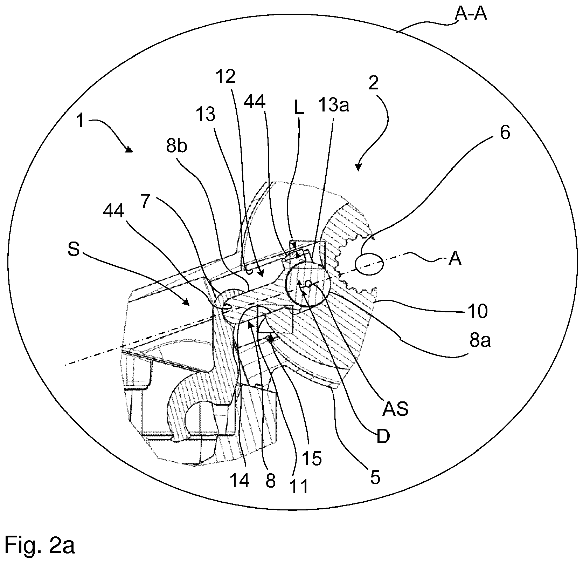

Fig. 1 zeigt eine Scheibenbremse 1 mit einem elektromechanischen Aktuator 2, wobei der elektromechanische Aktuator 2 ein Aktuatorgehäuse 5 aufweist. Der elektromechanische Aktuator 2 ist entlang einer axialen Achse A an der Scheibenbremse 1 angeflanscht. Die Scheibenbremse 1 weist zwei Bremsbeläge 4, 4a auf die gegen ein radiales Herausfallen mittels eines Niederhaltebügels 3 gehalten werden. Zudem ist die Scheibenbremse 1 unterteilt in einen Bremsträger 40 zur Aufnahme der Bremsbeläge 4, 4a und einen Bremssattel 41, wobei der Bremssattel 41 über zwei Führungsbolzen 42, 42a axial gleitend auf dem Bremsträger 40 gelagert ist. Der elektromechanische Aktuator 2 spannt während eines Bremsvorgangs eine Bremsscheibe 46 (Fig. 2) über die Bremsbeläge 4, 4a, einem nicht gezeigten Druckstück und mit einem in Figur 2a gezeigten Drehhebel 7 zu.

Wie der elektromechanische Aktuator 2 nach Fig. 1 im Detail aufgebaut ist, zeigt Fig. 2. In dem elektromechanischen Aktuator 2 ist über eine Welle 6 eine Kurvenscheibe 10 angeordnet, wobei die Kurvenscheibe 10 entlang der axialen Achse A ausgerichtet ist und um die Welle 6 rotierend bewegbar ist. Das Aktuatorgehäuse 5 weist im Inneren einen zylinderförmigen Führungsbereich 12 zum Führen eines Stößels 8 entlang der axialen Achse A auf. Der Stößel 8 ist zwischen einer ersten Innenwand 13 des Führungsbereichs 12, einer zweiten stirnseitig angeordneten Innenwand 13a des Führungsbereichs 12 und der Kurvenscheibe 10 angeordnet, wobei ein Hebelarm 8b des Stößels 8 nur teilweise zwischen der ersten Innenwand 13 des Führungsbereichs 12 und der Kurvenscheibe 10 angeordnet ist und der Hebelarm 8b radial an einer Anlagefläche 14 eines Anschlags 11 der Kurvenscheibe 10 aufliegt, also sich radial an dem Anschlag 11 abstützt. Der Anschlag 11 ist an einem äußeren Ende 15 der Kurvenscheibe 10 angeordnet. Die Kurvenscheibe 10 und der Anschlag 11 sind ein Bauteil. Axial begrenzt wird der Stößel 8 durch die zweite Innenwand 13a des Führungsbereichs 12 und dem Anschlag 11. Der Stößel 8 weist zusätzlich eine Führungsrolle 8a zum Führen des Stößels 8 entlang der Kurvenscheibe 10 auf. Der Führungsbereich 12 ist geometrisch in radialer Richtung so ausgestaltet dass der Stößel 8 in der Nulllage einen begrenzten Bewegungsspielraum um eine Stößelachse AS aufweist. Als Nulllage ist die Ausgangsposition S des Stößels 8 definiert, wobei kein Bremsvorgang, also ein Zuspannen der Bremsscheibe 46 über die Bremsbeläge 4, 4a, erfolgt. Zur Verwirklichung des begrenzten Bewegungsspielraums des Stößels 8 liegt der Stößel 8 zum einen radial an der Kurvenscheibe 10 auf. Zum anderen ist ein Abstand L (Fig. 2a) zwischen einer Gleitfase 44 des Stößels 8 und der ersten Innenwand 13 des Führungsbereichs 12 des Aktuatorgehäuses 5 so gering, dass der Stößel 8 in der Nullage einen Bewegungsspielraum um eine Stößelachse AS von maximal 3° aufweist, wodurch ein Verklemmen des Stößels 8 entgegengewirkt wird.

Der Abstand L zwischen dem Führungsbereich 12 und dem Stößels 8 des elektromechanischen Aktuators 2 nach Fig. 1 und 2 ist in Fig. 2a noch einmal im Detail gezeigt. Weiterhin ist in Figur 2a der Drehhebel 7 der Scheibenbremse 1 nach Figur 1 gezeigt. Der Drehhebel 7 befindet sich in einer Ausgangsposition S. Besonders deutlich wird die Positionierung des Stößels 8 in der Ausgangsposition S des Drehhebels 7. Der Stößel 8 stützt sich axial mit dem Hebelarm 8a in einer Aufnahme 45 des Drehhebels 7 ab. Gegen eine ungewollte Drehbewegung D des Drehhebels 7 und den damit verbundenen Herausfallen des Stößels 8, sichert, wie in Figur 2 beschrieben, der Anschlag 11 der Kurvenscheibe 10 den Stößel 8.

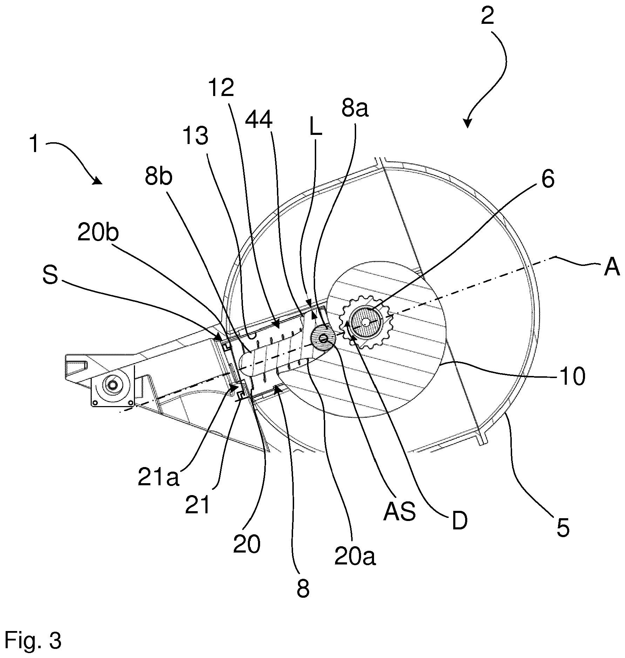

Alternativ kann der Stößel 8 in einer zweiten Ausführungsform nach Fig. 3 über eine Feder 20 in Position gehalten werden. Fig. 3 zeigt die Stellung des Stößels 8 und der Feder 20 in der Ausgangsposition S des Drehhebels 7 (Fig.2a). Die Feder 20 ist axial über einen ersten Endanschlag 20a an einer Federaufnahme 21 befestigt. Die als Tellerfeder ausgebildete Federaufnahme 21 stützt sich radial an der ersten Innenwand 13 des Führungsbereichs 12 des Aktuatorgehäuses 5 ab. Zusätzlich weist die Federaufnahme 21 eine Öffnung 21a zum axialen Durchführen des Hebelarms 8a des Stößels 8 auf. Die Feder 20 ist axial über den Stößel 8 geschoben und stützt sich mit einem zweiten Endanschlag 20b axial und radial an dem Hebelarm 8b des Stößels 8 ab. Ein axiales Herausfallen des Stößels 8 wird verhindert, da die Feder 20 während einer axialen Bewegung des Stößels 8 in Richtung des Drehhebels 7 (Fig. 2a) eine axiale Gegenkraft in Richtung der Kurvenscheibe 10 ausübt und ein Verdrehen des Stößels 8, um die Stößelachse AS verhindert.

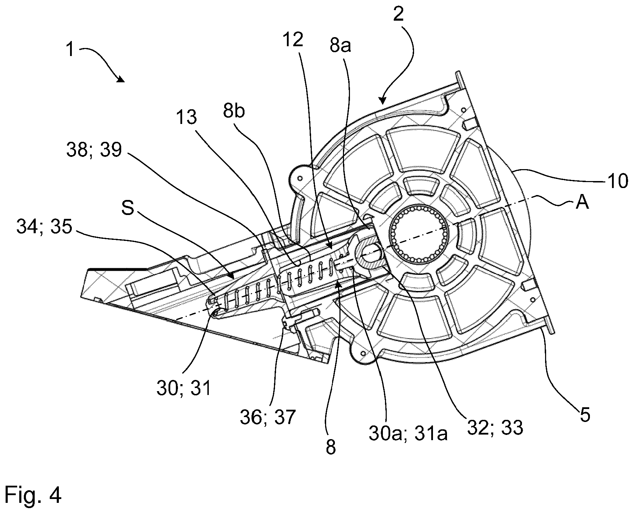

Eine weitere Möglichkeit zur Positionierung des Stößels 8 des elektromechanischen Aktuators 2 der Scheibenbremse 1 nach Fig. 1 zeigt Fig. 4. In Fig. 4 wird der Stößel 8 gegen ein Herausfallen aus der Kurvenscheibe 10 über eine parallel in Bezug des Stößels 8 angeordnete erste Feder 30 und eine der ersten Feder 30 gegenüberliegende parallel angeordnete zweite Feder 31 gehalten. Die zweite Feder 31 ist mit der ersten Feder 30 bauteilgleich. Auch die für die Anordnung der zweiten Feder 31 erforderlichen Bauteile sind mit den Bauteilen der ersten Feder 30 bauteilgleich, weshalb exemplarisch in Fig. 4 nur die Seite des elektromechanischen Aktuators 2 mit der ersten Feder 30 gezeigt ist. Die erste Feder 30 ist stößelseitig über einen ersten Endanschlag 30a der Feder 30 und über ein erstes Aufnahmelager 32 an der Welle 6 (Fig. 2) des Stößels 8 angeordnet. Die zweite Feder 31 ist stößelseitig über einen zweiten Endanschlag 31a der Feder 31 und über ein zweites Aufnahmelager 33 an der Welle 6 des Stößels 8 angeordnet Die Feder 31 ist dazu ausgebildet, den Stößel 8 in einer Ausgangsposition des Drehhebels 7 axial und radial zu fixieren. Das erste Aufnahmelager 32 und das zweite Aufnahmelager 33 sind beweglich, daher nicht fest an der Welle angeordnet und gleichen eine radiale und/oder axiale Bewegung des Stößels 8, ausgelöst durch eine Drehbewegung der Kurvenscheibe 10, aus. Gleichzeitig wird die erste Feder 30 axial an der dem ersten Aufnahmelager 32 gegenüberliegenden Seite über ein erstes Federhalteelement 34 gehalten. Die zweite Feder 31 wird wiederum axial an der dem zweiten Aufnahmelager 33 gegenüberliegenden Seite über ein zweites Federhalteelement 35 gehalten. Das erste Federhalteelement 34 und das zweite Federhalteelement 35 sind aus einem Metallwerkstoff hergestellt. Nach der Montage der ersten Feder 30 an dem ersten Aufnahmelager 32, wird das erste Federhalteelement 34 zunächst über eine erste Feder-Nut-Verbindung 38 radial an dem Führungsbereich 12 des Aktuatorgehäuses 5 positioniert und anschließend über eine erste Schraubverbindung 36 auf der der ersten Feder-Nut-Verbindung 38 gegenüberliegenden Seite des ersten Federhalteelements 34 axial an dem Aktuatorgehäuse 5 durch einen Kraft- und Formschluss fixiert. Die für die erste Feder 30 beschriebene Montage gilt auch für die zweite Feder 32. Nach der Montage der zweiten Feder 31 an dem zweiten Aufnahmelager 33, wird das zweite Federhalteelement 35 zunächst über eine zweite Feder-Nut-Verbindung 39 radial an dem Führungsbereich 12 des Aktuatorgehäuses 5 positioniert und anschließend über eine zweite Schraubverbindung 37 auf der der zweiten Feder-Nut-Verbindung 39 gegenüberliegenden Seite des zweiten Federhalteelements 35 axial an dem Aktuatorgehäuse 5 durch einen Kraft- und Formschluss fixiert.

### Bezugszeichenliste als Teil der Beschreibung

- 1: Scheibenbremse
- 2: elektromechanischer Aktuator
- 3: Niederhaltebügel
- 4, 4a: Bremsbeläge
- 5: Aktuatorgehäuse
- 6: Welle
- 7: Drehhebel
- 8: Stößel
- 8a: Führungsrolle
- 8b: Hebelarm
- 10: Kurvenscheibe
- 11: Anschlag
- 12: Führungsbereich
- 13: erste Innenwand des Führungsbereichs 12 des Aktuatorgehäuses 5
- 13a: zweite Innenwand des Führungsbereichs 12 des Aktuatorgehäuses 5
- 14: Anlagefläche
- 15: äußeres Ende der Kurvenscheibe 10
- 20: Feder; Druckfeder
- 20a: erster Endanschlag der Feder 20
- 20b: zweiter Endanschlag der Feder 20
- 21: Federaufnahme
- 21a: Öffnung der Federaufnahme 21
- 30: erste Feder
- 31: zweite Feder
- 30a: Endanschlag der ersten Feder 30
- 31a: Endanschlag der zweiten Feder 31
- 32: erstes Aufnahmelager
- 33: zweites Aufnahmelager
- 34: erste Federhalteelement
- 35: zweite Federhalteelement
- 36: erste Schraubverbindung
- 37: zweite Schraubverbindung
- 38: erste Feder-Nut-Verbindung
- 39: zweite Feder-Nut-Verbindung
- 40: Bremsträger
- 41: Bremssattel
- 42, 42a: Führungsbolzen
- 44: Gleitfase des Stößels 8
- 45: Aufnahme des Drehhebels 7
- 46: Bremsscheibe
- A: axiale Achse des elektromechanischen Aktuators
- A-A: Schnitt
- L: Abstand
- AS: Stößelachse
- D: Drehbewegung des Drehhebels 7
- S: Ausgangsposition

## Patentansprüche

1. Scheibenbremse (1) mit einem elektromechanischen Aktuator (2) für Fahrzeuge, insbesondere für Nutzfahrzeuge zum Zuspannen einer Bremsscheibe (46) über einen Drehhebel (7) und zwei Bremsbelägen (4, 4a), und wobei der elektromechanische Aktuator (2) ein Aktuatorgehäuse (5), eine in dem Aktuatorgehäuse (5) über eine Welle (6) angeordnete Kurvenscheibe (10) und einen entlang einer axialen Achse (A) mit der Kurvenscheibe (10) wirkverbundenden Stößel (8) umfasst, **dadurch gekennzeichnet, dass** die Kurvenscheibe (10) einen Anschlag (11) aufweist und der Anschlag (11) dazu eingerichtet ist den Stößel (8) in einer Ausgangsposition (S) des Drehhebels (7) in Richtung einer axialen Achse (A) des elektromechanischen Aktuators (2), entgegengesetzt der Kurvenscheibe (10), zu fixieren.

2. Scheibenbremse (1) nach Anspruch 1, **dadurch gekennzeichnet, dass** der elektromechanische Aktuator (2) zwischen einer Gleitfase (44) des Stößels (8), einem Führungsbereich (12) des Stößels (8), zum Führen des Stößels (8) entlang der axialen Achse (A), und einer ersten Innenwand (13) eines Führungsbereichs 12 des Aktuatorgehäuses (5) einen Abstand (L) aufweist und der Abstand (L) dazu ausgelegt ist, das der Stößel (8) in einem Bereich, ausgehend von der Ausgangsposition (S) des Drehhebels (7), zwischen 0° und 5° um ein Stößelachse (AS) bewegbar ist.

3. Scheibenbremse (1) nach Anspruch 1 oder 2, **dadurch gekennzeichnet, dass** der Anschlag (11), radial in Richtung des Stößels (8) eine Anlagefläche (14) aufweist und der Stößel (8) in der Ausgangsposition (S) an der Anlagefläche (14) aufliegt und wobei der Führungsbereich (12) des Aktuatorgehäuses (5) stirnseitig, bezogen auf die axiale Achse (A), eine zweite Innenwand 13a aufweist und der Stößel (8) in der Ausgangsposition (S) an der zweiten Innenwand 13a des Führungsbereichs (12) des Aktuatorgehäuses (5) anliegt.

4. Scheibenbremse (1) nach Anspruch 3, **dadurch gekennzeichnet, dass** der Stößel (8) eine Führungsrolle (8a) und einen axial in Richtung des Drehhebels (7) der Scheibenbremse (1) angeordneten Hebelarm (8b) aufweist und der Hebelarm (8b) in der Ausgangsposition (S) radial an der Anlagefläche (14) anliegt.

5. Scheibenbremse (1) nach einem der vorangegangenen Ansprüche, **dadurch gekennzeichnet, dass** die Kurvenscheibe (10) schneckenförmig ausgebildet ist und dass der Anschlag (11) radial an einem äußeren Ende (15) der Kurvenscheibe (10) angeordnet ist.

6. Scheibenbremse (1) mit einem elektromechanischen Aktuator (2) für Fahrzeuge, insbesondere für Nutzfahrzeuge zum Zuspannen einer Bremsscheibe (46) über einen Drehhebel (7) und zwei Bremsbelägen (4, 4a), und wobei der elektromechanische Aktuator (2) ein Aktuatorgehäuse (5), eine in dem Aktuatorgehäuse (5), über eine Welle (6), angeordnete Kurvenscheibe (10) und einen entlang einer axialen Achse (A) mit der Kurvenscheibe (10) wirkverbundenden Stößel (8) umfasst, **dadurch gekennzeichnet, dass** eine Feder (20) den Stößel (8) umschließt, die Feder (20) axial mit einem ersten Endanschlag (20a) an dem Aktuatorgehäuse (5) angeordnet ist, die Feder (20) axial mit einem zweiten Endanschlag (20b) an dem Stößel (8) angeordnet ist und die Feder (20) dazu ausgebildet ist, den Stößel (8) in einer Ausgangsposition (S) des Drehhebels (7) axial und radial zu fixieren.

7. Scheibenbremse (1) nach Anspruch 6, **dadurch gekennzeichnet, dass** das Aktuatorgehäuse (5) eine Federaufnahme (21) aufweist und die Federaufnahme (21) zum Abstützen des ersten Endanschlags (20a) der Feder (20) in axialer Richtung ausgebildet ist.

8. Scheibenbremse (1) nach Anspruch 7, **dadurch gekennzeichnet dass** die Federaufnahme (21) ein Federteller (21) ist und der Federteller (21) eine Öffnung (21a) zum Durchführen des Stößels (8) aufweist.

9. Scheibenbremse (1) nach einem der Ansprüche 6 bis 8, **dadurch gekennzeichnet, dass** die Feder (20) eine Druckfeder (20) ist.

10. Scheibenbremse (1) mit einem elektromechanischen Aktuator (2) für Fahrzeuge, insbesondere für Nutzfahrzeuge zum Zuspannen einer Bremsscheibe (46) über einen Drehhebel (7) und zwei Bremsbelägen (4, 4a), und wobei der elektromechanische Aktuator (2) ein Aktuatorgehäuse (5), eine in dem Aktuatorgehäuse (5), über eine Welle (6), angeordnete Kurvenscheibe (10) und einen entlang einer axialen Achse (A) mit der Kurvenscheibe (10) wirkverbundenden Stößels (8) umfasst, **dadurch gekennzeichnet, dass** tangential entlang des Stößel (8) eine erste Feder (30) und eine der ersten Feder (30) gegenüberliegende parallel angeordnete zweite Feder (31) angeordnet sind, wobei je einer axialen Seite des Stößels (8) eine der ersten Feder (30) und der zweiten Feder (31) angeordnet ist und wobei die erste Feder (30) und die zweite Feder (31) dazu ausgebildet sind den Stößel (8) axial und radial in einer Ausgangsposition (S) des Drehhebels (7) zu halten.

11. Scheibenbremse (1) nach Anspruch 10, **dadurch gekennzeichnet, dass** eine Führungsrolle (8a) des Stößels (8), bezogen auf die axiale Achse (A), senkrecht und horizontal ein erstes Aufnahmelager (32) zur Fixierung eines Endanschlags (30a) der ersten Feder (30) aufweist und das die Führungsrolle (8a), bezogen auf die axiale Achse (A), senkrecht und horizontal ein zweites Aufnahmelager (33) zur Fixierung eines Endanschlags (31a) der zweiten Feder (31) aufweist.

12. Scheibenbremse (1) nach Anspruch 10 oder 11, **dadurch gekennzeichnet, dass** der elektromechanische Aktuator (2) ein erstes Federhaltelement (34) zur Aufnahme des Endanschlags (30a) der ersten Feder (30) aufweist und das der elektromechanische Aktuator (2) ein zweites Federhalteelement (35) zur Aufnahme des Endanschlags (31a) der zweiten Feder (31) aufweist.

13. Scheibenbremse (1) nach einem der Ansprüche 10 bis 12, **dadurch gekennzeichnet, dass** das erste Federhalteelement (34) radial an einer ersten Innenwand (13) des Führungsbereichs 12 des Aktuatorgehäuses (5) fixiert ist und dass das zweite Federhalteelement (35) radial an der ersten Innenwand (13) des Führungsbereichs 12 des Aktuatorgehäuses (5) fixiert sind.

14. Scheibenbremse nach Anspruch 13, **dadurch gekennzeichnet, dass** das erste Federhalteelement (34) über eine erste Schraubverbindung (36) und einer erste Feder-Nut-Verbindung (38) an der ersten Innenwand (13) des Führungsbereichs 12 des Aktuatorgehäuses (5) fixiert ist und dass das zweite Federhalteelement (35) über eine zweite Schraubverbindung (37) und einer Feder-Nut-Verbindung (39) an der ersten Innenwand (13) des Führungsbereichs 12 des Aktuatorgehäuses (5) fixiert ist.

15. Scheibenbremse (1) nach einem der vorangegangenen Ansprüchen, **dadurch gekennzeichnet, dass** das Aktuatorgehäuse (5) ein Aluminiumgehäuse (5) ist.

## Claims

1. Disc brake (1) with an electromechanical actuator (2) for vehicles, in particular for utility vehicles for application to a brake disc (46) via a rotary lever (7) and two brake pads (4, 4a), and the electromechanical actuator (2) comprising an actuator housing (5), a cam disc (10) which is arranged in the actuator housing (5) via a shaft (6), and a plunger (8) which is operatively connected to the cam disc (10) along an axial axis (A), **characterized in that** the cam disc (10) has a stop (11), and the stop (11) is configured to fix the plunger (8) in a starting position (S) of the rotary lever (7) in the direction of an axial axis (A) of the electromechanical actuator (2), in an opposed manner with respect to the cam disc (10).

2. Disc brake (1) according to Claim 1, **characterized in that** the electromechanical actuator (2) is at a spacing (L) between a sliding bevel (44) of the plunger (8), a guide region (12) of the plunger (8), for guiding the plunger (8) along the axial axis (A), and a first inner wall (13) of a guide region 12 of the actuator housing (5), and the spacing (L) is designed such that the plunger (8) can be moved in a range, starting from the starting position (S) of the rotary lever (7), between 0° and 5° about the plunger axis (AS).

3. Disc brake (1) according to Claim 1 or 2, **characterized in that** the stop (11) has a bearing face (14) radially in the direction of the plunger (8), and the plunger (8) lies on the bearing face (14) in the starting position (S), and the guide region (12) of the actuator housing (5) having a second inner wall 13a on the end side, in relation to the axial axis (A), and the plunger (8) bearing against the second inner wall 13a of the guide region (12) of the actuator housing (5) in the starting position (S).

4. Disc brake (1) according to Claim 3, **characterized in that** the plunger (8) has a guide roller (8a) and a lever arm (8b) which is arranged axially in the direction of the rotary lever (7) of the disc brake (1), and the lever arm (8b) bears radially against the bearing face (14) in the starting position (S).

5. Disc brake (1) according to one of the preceding claims, **characterized in that** the cam disc (10) is of worm-shaped configuration, and **in that** the stop (11) is arranged radially at an outer end (15) of the cam disc (10) .

6. Disc brake (1) with an electromechanical actuator (2) for vehicles, in particular for utility vehicles for application to a brake disc (46) via a rotary lever (7) and two brake pads (4, 4a), and the electromechanical actuator (2) comprising an actuator housing (5), a cam disc (10) which is arranged in the actuator housing (5) via a shaft (6), and a plunger (8) which is operatively connected to the cam disc (10) along an axial axis (A), **characterized in that** the spring (20) encloses the plunger (8), the spring (20) is arranged axially with a first end stop (20a) on the actuator housing (5), the spring (20) is arranged axially with a second end stop (20b) on the plunger (8), and the spring (20) is configured to fix the plunger (8) axially and radially in a starting position (S) of the rotary lever (7).

7. Disc brake (1) according to Claim 6, **characterized in that** the actuator housing (5) has a spring support (21), and the spring support (21) is configured to support the first end stop (20a) of the spring (20) in the axial direction.

8. Disc brake (1) according to Claim 7, **characterized in that** the spring support (21) is a spring collar (21), and the spring collar (21) has an opening (21a) for leading through the plunger (8).

9. Disc brake (1) according to one of Claims 6 to 8, **characterized in that** the spring (20) is a compression spring (20).

10. Disc brake (1) with an electromechanical actuator (2) for vehicles, in particular for utility vehicles for application to a brake disc (46) via a rotary lever (7) and two brake pads (4, 4a), and the electromechanical actuator (2) comprising an actuator housing (5), a cam disc (10) which is arranged in the actuator housing (5) via a shaft (6), and a plunger (8) which is operatively connected to the cam disc (10) along an axial axis (A), **characterized in that** a first spring (30) and a second spring (31) which is arranged in parallel opposite the first spring (30) are arranged tangentially along the plunger (8), one of the first spring (30) and the second spring (31) being arranged in each case on an axial side of the plunger (8), and the first spring (30) and the second spring (31) being configured to hold the plunger (8) axially and radially in a starting position (S) of the rotary lever (7).

11. Disc brake (1) according to Claim 10, **characterized in that** a guide roller (8a) of the plunger (8) has, perpendicularly and horizontally (in relation to the axial axis (A)), a first receiving bearing (32) for fixing an end stop (30a) of the first spring (30), and **in that** the guide roller (8a) has, perpendicularly and horizontally (in relation to the axial axis (A)), a second receiving bearing (33) for fixing an end stop (31a) of the second spring (31).

12. Disc brake (1) according to Claim 10 or 11, **characterized in that** the electromechanical actuator (2) has a first spring holding element (34) for receiving the end stop (30a) of the first spring (30), and **in that** the electromechanical actuator (2) has a second spring holding element (35) for receiving the end stop (31a) of the second spring (31).

13. Disc brake (1) according to one of Claims 10 to 12, **characterized in that** the first spring holding element (34) is fixed radially on a first inner wall (13) of the guide region 12 of the actuator housing (5), and **in that** the second spring holding element (35) is fixed radially on the first inner wall (13) of the guide region 12 of the actuator housing (5).

14. Disc brake according to Claim 13, **characterized in that** the first spring holding element (34) is fixed on the first inner wall (13) of the guide region 12 of the actuator housing (5) via a first screw connection (36) and a first tongue/groove connection (38), and **in that** the second spring holding element (35) is fixed on the first inner wall (13) of the guide region 12 of the actuator housing (5) via a second screw connection (37) and a tongue/groove connection (39).

15. Disc brake (1) according to one of the preceding claims, **characterized in that** the actuator housing (5) is an aluminium housing (5).

## Revendications

1. Frein à disque (1) comprenant un actionneur électromécanique (2) pour véhicules, en particulier pour véhicules utilitaires, pour le serrage d'un disque de frein (46) par le biais d'un levier rotatif (7) et de deux garnitures de frein (4, 4a), et l'actionneur électromécanique (2) comprenant un boîtier d'actionneur (5), un disque à came (10) disposé dans le boîtier d'actionneur (5) sur un arbre (6) et un poussoir (8) coopérant avec le disque à came (10) le long d'un axe axial (A), **caractérisé en ce que** le disque à came (10) présente une butée (11) et la butée (11) est conçue pour fixer le poussoir (8) dans une position de départ (S) du levier rotatif (7) en direction d'un axe axial (A) de l'actionneur électromécanique (2), à l'opposé du disque à came (10).

2. Frein à disque (1) selon la revendication 1, **caractérisé en ce que** l'actionneur électromécanique (2) présente un espacement (L) entre un biseau de glissement (44) du poussoir (8), une région de guidage (12) du poussoir (8), servant au guidage du poussoir (8) le long de l'axe axial (A), et une première paroi interne (13) d'une région de guidage (12) du boîtier d'actionneur (5), et l'espacement (L) est configuré pour que le poussoir (8) soit déplaçable dans une plage, à partir de la position de départ (S) du levier rotatif (7), d'entre 0° et 5° autour d'un axe de poussoir (AS).

3. Frein à disque (1) selon la revendication 1 ou 2, **caractérisé en ce que** la butée (11) présente, radialement en direction du poussoir (8), une surface d'appui (14) et le poussoir (8) repose sur la surface d'appui (14) dans la position de départ (S) et la région de guidage (12) du boîtier d'actionneur (5) présentant du côté frontal, par rapport à l'axe axial (A), une deuxième paroi interne (13a) et le poussoir (8) s'appuyant contre la deuxième paroi interne (13a) de la région de guidage (12) du boîtier d'actionneur (5) dans la position de départ (S).

4. Frein à disque (1) selon la revendication 3, **caractérisé en ce que** le poussoir (8) présente un rouleau de guidage (8a) et un bras de levier (8b) disposé axialement en direction du levier rotatif (7) du frein à disque (1) et le bras de levier (8b) s'appuie radialement contre la surface d'appui (14) dans la position de départ (S) .

5. Frein à disque (1) selon l'une des revendications précédentes, **caractérisé en ce que** le disque à came (10) est réalisé sous forme hélicoïdale et **en ce que** la butée (11) est disposée radialement à une extrémité extérieure (15) du disque à came (10).

6. Frein à disque (1) comprenant un actionneur électromécanique (2) pour véhicules, en particulier pour véhicules utilitaires, pour le serrage d'un disque de frein (46) par le biais d'un levier rotatif (7) et de deux garnitures de frein (4, 4a), et l'actionneur électromécanique (2) comprenant un boîtier d'actionneur (5), un disque à came (10) disposé dans le boîtier d'actionneur (5) sur un arbre (6) et un poussoir (8) coopérant avec le disque à came (10) le long d'un axe axial (A), **caractérisé en ce qu'**un ressort (20) entoure le poussoir (8), le ressort (20) est disposé axialement par une première butée de fin de course (20a) sur le boîtier d'actionneur (5), le ressort (20) est disposé axialement par une deuxième butée de fin de course (20b) sur le poussoir (8) et le ressort (20) est réalisé pour fixer le poussoir (8) axialement et radialement dans une position de départ (S) du levier rotatif (7).

7. Frein à disque (1) selon la revendication 6, **caractérisé en ce que** le boîtier d'actionneur (5) présente un logement de ressort (21) et le logement de ressort (21) est réalisé pour supporter la première butée de fin de course (20a) du ressort (20) dans la direction axiale.

8. Frein à disque (1) selon la revendication 7, **caractérisé en ce que** le logement de ressort (21) est une coupelle de ressort (21) et la coupelle de ressort (21) présente une ouverture (21a) servant au passage du poussoir (8).

9. Frein à disque (1) selon l'une des revendications 6 à 8, **caractérisé en ce que** le ressort (20) est un ressort de compression (20).

10. Frein à disque (1) comprenant un actionneur électromécanique (2) pour véhicules, en particulier pour véhicules utilitaires, pour le serrage d'un disque de frein (46) par le biais d'un levier rotatif (7) et de deux garnitures de frein (4, 4a), et l'actionneur électromécanique (2) comprenant un boîtier d'actionneur (5), un disque à came (10) disposé dans le boîtier d'actionneur (5) sur un arbre (6) et un poussoir (8) coopérant avec le disque à came (10) le long d'un axe axial (A), **caractérisé en ce qu'**un premier ressort (30) et un deuxième ressort (31) opposé au premier ressort (30) et disposé parallèlement sont disposés tangentiellement le long du poussoir (8), l'un parmi le premier ressort (30) et le deuxième ressort (31) étant disposé respectivement au niveau d'un côté axial du poussoir (8) et le premier ressort (30) et le deuxième ressort (31) étant réalisés pour retenir le poussoir (8) axialement et radialement dans une position de départ (S) du levier rotatif (7).

11. Frein à disque (1) selon la revendication 10, **caractérisé en ce qu'**un rouleau de guidage (8a) du poussoir (8) présente, par rapport à l'axe axial (A), perpendiculairement et horizontalement, un premier palier de logement (32) servant à la fixation d'une butée de fin de course (30a) du premier ressort (30) et **en ce que** le rouleau de guidage (8a) présente, par rapport à l'axe axial (A), perpendiculairement et horizontalement, un deuxième palier de logement (33) servant à la fixation d'une butée de fin de course (31a) du deuxième ressort (31) .

12. Frein à disque (1) selon la revendication 10 ou 11, **caractérisé en ce que** l'actionneur électromécanique (2) présente un premier élément de retenue de ressort (34) servant au logement de la butée de fin de course (30a) du premier ressort (30) et **en ce que** l'actionneur électromécanique (2) présente un deuxième élément de retenue de ressort (35) servant au logement de la butée de fin de course (31a) du deuxième ressort (31).

13. Frein à disque (1) selon l'une des revendications 10 à 12, **caractérisé en ce que** le premier élément de retenue de ressort (34) est fixé radialement à une première paroi interne (13) de la région de guidage (12) du boîtier d'actionneur (5) et **en ce que** le deuxième élément de retenue de ressort (35) est fixé radialement à la première paroi interne (13) de la région de guidage (12) du boîtier d'actionneur (5).

14. Frein à disque selon la revendication 13, **caractérisé en ce que** le premier élément de retenue de ressort (34) est fixé par le biais d'une première liaison vissée (36) et d'une première liaison à rainure et languette (38) à la première paroi interne (13) de la région de guidage (12) du boîtier d'actionneur (5) et **en ce que** le deuxième élément de retenue de ressort (35) est fixé par le biais d'une deuxième liaison vissée (37) et d'une liaison à rainure et languette (39) à la première paroi interne (13) de la région de guidage (12) du boîtier d'actionneur (5).

15. Frein à disque (1) selon l'une des revendications précédentes, **caractérisé en ce que** le boîtier d'actionneur (5) est un boîtier en aluminium (5).
